# DEMANDE DE BREVET EUROPEEN

(11) **EP 1 464 535 A1**
(43) Date de publication de la demande: **06.10.2004**
(21) Numéro de dépôt: 04290806.1
(22) Date de dépôt: 25.03.2004
(51) Int. Cl.: B60N 2/70

(54) **Siège de vehicule automobile**

(30) Priorité: 02.04.2003 FR 0304097
(71) Demandeur: Centre d'Etude et de Recherche pour l'Automobile ( CERA), 51100 Reims (FR)
(72) Inventeur: Patte, Damien, 51490 Epoye (FR); Del Valle, Jaume, 08211 Castellar del Valles Barcelona (ES)
(74) Mandataire: Geismar, Thierry

(57) **Abrégé**

L'invention concerne un siège de véhicule automobile, comprenant une structure de dossier (3) généralement en forme de U, une nappe textile (4) de suspension de dossier, des moyens de fixation (9) de ladite nappe de suspension à ladite structure et au moins un élément de garnissage (8) de ladite structure.

Ladite nappe de suspension forme la nappe arrière du dossier dudit siège, ledit élément de garnissage s'étendant autour de ladite structure et derrière lesdits moyens de fixation.

## Description

La présente invention concerne un siège de véhicule automobile, et plus particulièrement un tel siège comprenant une structure de dossier généralement en forme de U, une nappe textile de suspension de dossier, des moyens de fixation de ladite nappe de suspension à ladite structure et au moins un élément de garnissage de ladite structure.

Les dossiers de sièges de véhicules automobiles comportaient traditionnellement une nappe de suspension en treillis métallique destinée à soutenir le dos de l'occupant du siège. Ils comprenaient par ailleurs un rideau de finition en face arrière destiné à donner son aspect au siège. Enfin, outre la matelassure, ils comprenaient une coiffe de rembourrage et de masquage de la structure.

Il est maintenant connu de remplacer la nappe en treillis métallique par une nappe mixte métallique et textile ou par une nappe totalement textile. Il en résulte des gains en poids et en coûts.

La présente invention vise à simplifier encore la réalisation des sièges de véhicules automobile, en réduisant le nombre de composants.

L'invention a également pour but, lorsqu'elle est appliquée à des sièges avant, de procurer un gain d'espace pour les genoux des passagers arrière.

A cet effet, l'invention a pour objet un siège de véhicule automobile, comprenant une structure de dossier généralement en forme de U, une nappe textile de suspension de dossier, des moyens de fixation de ladite nappe de suspension à ladite structure et au moins un élément de garnissage de ladite structure, dans lequel ladite nappe de suspension forme la nappe arrière du dossier dudit siège, ledit élément de garnissage s'étendant autour de ladite structure et derrière lesdits moyens de fixation.

Ainsi, le rideau de finition est donc supprimé, l'aspect du siège étant directement fourni par la face extérieure de la nappe de suspension.

Dans un mode de réalisation particulier, lesdits moyens de fixation de la nappe de suspension à la structure comprennent au moins un profilé d'accrochage à ladite structure, relié à ladite nappe de suspension.

Plus particulièrement, un bord de ladite nappe peut être surmoulé par ledit profilé d'accrochage.

Le profilé d'accrochage peut en outre comprendre des moyens de fixation dudit élément de garnissage.

Ces moyens de fixation de l'élément de garnissage peuvent en particulier comprendre une rainure de réception d'un bord de l'élément de garnissage.

Dans un mode de réalisation particulier, ladite rainure s'étend en profondeur sensiblement parallèlement au plan de ladite nappe de suspension et a son ouverture tournée vers le centre de la nappe.

Plus particulièrement, le bord de l'élément de garnissage peut, dans un mode de réalisation, comprendre un profil de rigidification pour assurer son introduction et son maintien dans la rainure du profilé.

Egalement dans un mode de réalisation particulier, ladite nappe de suspension comprend, le long de son bord inférieur sensiblement horizontal, une bavette de masquage de la partie inférieure de ladite structure.

Cette bavette de masquage peut comporter, sur son bord opposé à ladite nappe, des moyens d'accrochage à la structure du siège.

L'invention a également pour objet un véhicule automobile comportant un siège tel que décrit ci-dessus.

On décrira maintenant, à titre d'exemple non limitatif, un mode de réalisation particulier de l'invention, en référence aux dessins schématiques annexés dans lesquels :
- la figure 1 est une vue en perspective de l'arrière d'un siège selon l'invention avant montage ;
- la figure 2 est une vue similaire à celle de la figure 1 en cours de montage ;

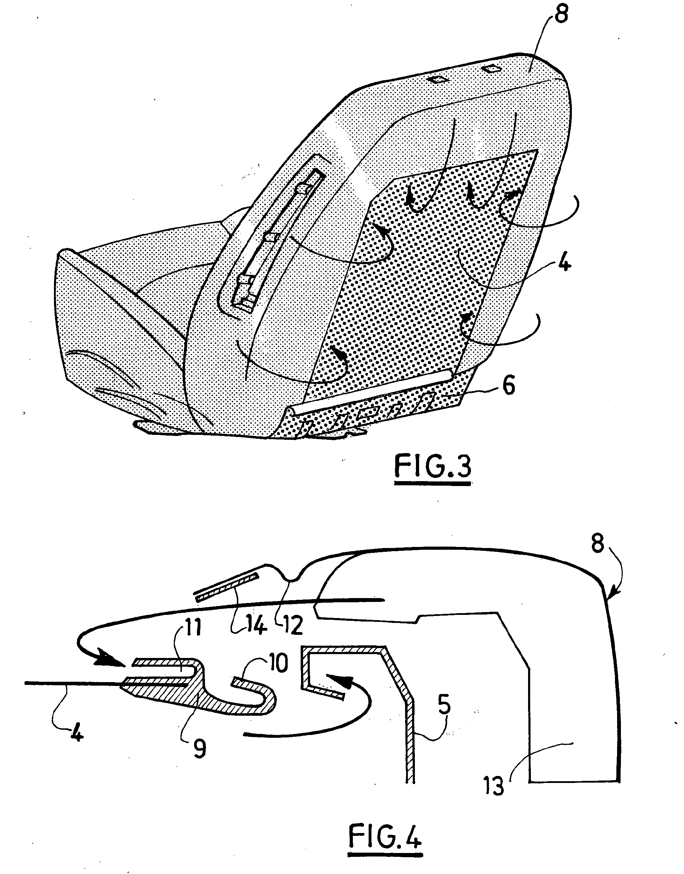

- la figure 3 est une vue similaire à celles des figures 1 et 2 après montage ;
- la figure 4 est une vue partielle à plus grande échelle en coupe horizontale du dossier du siège de la figure 1 avant son montage ; et

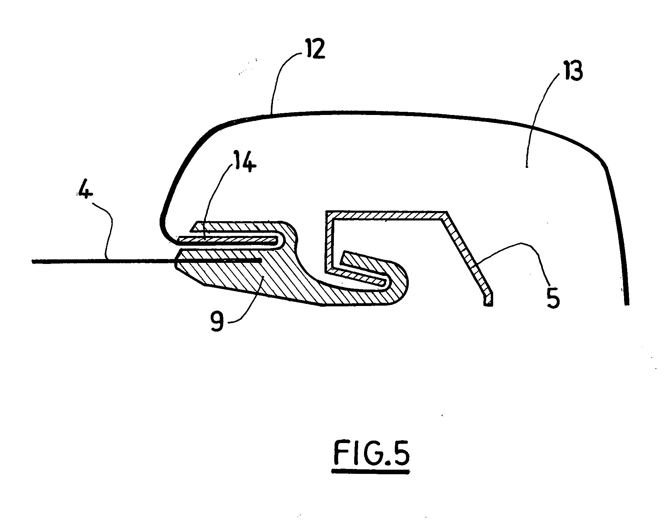

- la figure 5 est une vue similaire à celle de la figure 2 après montage du siège.

On définit les termes devant et derrière par rapport à une direction allant de l'arrière du véhicule automobile à l'avant de ce véhicule et les termes supérieur et inférieur par rapport à une direction sensiblement verticale.

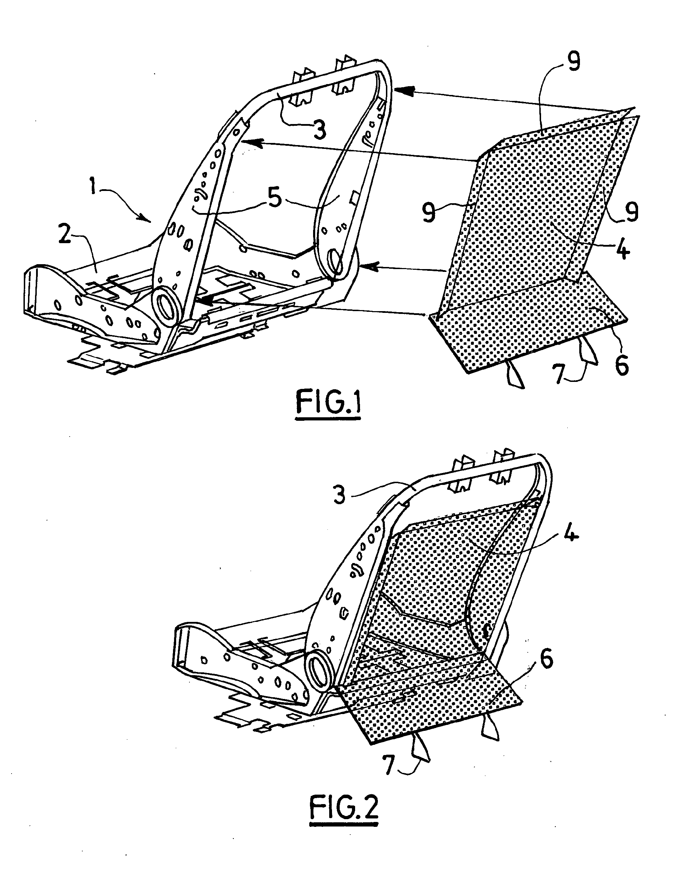

On voit à la figure 1 une structure de siège 1 comportant elle-même une structure d'assise 2 et une structure de dossier 3. La structure de dossier 3 est réalisée de façon connue en forme de U renversé.

Une nappe de suspension 4 est réalisée en textile approprié pour apporter le confort nécessaire à la tenue du dos de l'utilisateur. Cette nappe est fixée comme cela sera décrit ci-après aux montants 5 de la structure 3.

La nappe 4 possède une bavette 6 en bordure de son bord horizontal inférieur. Cette bavette 6 est munie le long de son bord opposé à la nappe 4 de moyens d'accrochage 7 à la structure 1 pour masquer la partie inférieure de cette structure.

Une coiffe 8 est montée sur la structure de dossier 6 de manière à laisser apparente la nappe de suspension 4 qui fait ainsi également office de rideau de finition.

Les bords latéraux et supérieur de la nappe 4 sont surmoulés dans un profilé 9 d'accrochage.

Les profilés 9 présentent, à l'opposé de la nappe 4, une forme en crochet 10 leur permettant de fixer la nappe sur les montants 5 de la structure 3. Du côté de la nappe 4, les profilés 9 comportent une rainure 11 qui s'étend en profondeur parallèlement au plan de la nappe et qui s'ouvrent en direction du centre de la nappe.

La coiffe 8 comporte un textile 12 partiellement garni de mousse 13. Les bords du textile 12 ne comportent pas de mousse mais sont par exemple cousus ou collés sur un profil de rigidification 14.

Après accrochage de la nappe sur les montants 5, les bords du textile 12 munis des profils 14 sont introduits à force dans les rainures 11 des profilés 9, où ils sont retenus par l'élasticité du textile et de la mousse 13.
Ainsi, la coiffe 8 masque la structure 3 et les profilés d'accrochage 9.

## Revendications

1. Siège de véhicule automobile, comprenant une structure de dossier (3) généralement en forme de U, une nappe textile (4) de suspension de dossier, des moyens de fixation (9) de ladite nappe de suspension à ladite structure et au moins un élément de garnissage (8) de ladite structure, **caractérisé par le fait que** ladite nappe de suspension forme la nappe arrière du dossier dudit siège, ledit élément de garnissage s'étendant autour de ladite structure et derrière lesdits moyens de fixation.

2. Siège selon la revendication 1, dans lequel lesdits moyens de fixation de la nappe de suspension à la structure comprennent au moins un profilé (9) d'accrochage à ladite structure, relié à ladite nappe de suspension.

3. Siège selon la revendication 2, dans lequel un bord de ladite nappe est surmoulé par ledit profilé d'accrochage.

4. Siège selon l'une quelconque des revendications 2 et 3, dans lequel ledit profilé d'accrochage comprend des moyens (11) de fixation dudit élément de garnissage.

5. Siège selon la revendication 4, dans lequel lesdits moyens de fixation de l'élément de garnissage comprennent une rainure de réception d'un bord de l'élément de garnissage.

6. Siège selon la revendication 5, dans lequel ladite rainure s'étend en profondeur sensiblement parallèlement au plan de ladite nappe de suspension et a son ouverture tournée vers le centre de la nappe.

7. Siège selon l'une quelconque des revendications 5 et 6, dans lequel le bord de l'élément de garnissage comprend un profil (14) de rigidification.

8. Siège selon l'une quelconque des revendications 1 à 7, dans lequel ladite nappe de suspension comprend, le long de son bord inférieur sensiblement horizontal, une bavette (6) de masquage de la partie inférieure de ladite structure.

9. Siège selon la revendication 8, dans lequel la bavette de masquage comporte, sur son bord opposé à ladite nappe, des moyens (7) d'accrochage à la structure du siège.

10. Véhicule automobile, **caractérisé par le fait qu'**il comporte un siège selon l'une quelconque des revendications 1 à 9.
